**Europäisches Patentamt**

**European Patent Office**

**Office européen des brevets**

(11) Publication number: **0 440 461 A1**

(12) **EUROPEAN PATENT APPLICATION**

(21) Application number: 91300744.9

(51) Int. Cl.⁵: **F16C 3/02, F16C 7/00**

(22) Date of filing: 30.01.91

(30) Priority: 31.01.90 JP 23428/90
10.08.90 JP 213935/90
30.10.90 JP 294871/90
29.11.90 JP 334270/90

(43) Date of publication of application:
07.08.91 Bulletin 91/32

(84) Designated Contracting States:
DE FR GB IT SE

(71) Applicant: SUMITOMO CHEMICAL
COMPANY, LIMITED
5-33 Kitahama 4-chome Chuo-ku
Osaka-shi Osaka (JP)

(72) Inventor: Yamatsuta, Kohji
2-13-1 Umezono
Tsukuba-shi, Ibaraki (JP)
Inventor: Nakano, Yoshifumi
7, Kasuga 3-chome
Tsukuba-shi, Ibaraki (JP)
Inventor: Murotani, Hitoshi
3-18-5, Matsushiro
Tsukuba-shi, Ibaraki (JP)
Inventor: Shinohara, Yasuo
1510-144, Niihari-mura
Niihari-gun, Ibaraki (JP)

(74) Representative: Diamond, Bryan Clive et al
Gee & Co., Chancery House, Chancery Lane
London WC2A 1QU (GB)

(54) **Drive shaft made of fiber-reinforced plastics.**

(57)     Drive shaft (1) composed of a fiber reinforced plastic pipe and fitting(s) pressed thereinto.
    The connecting portion (2) of the pipe, to be fitted over the fitting (3), and the connecting portion (7) of the fitting (3), to be fitted into the connecting portion (2) of the pipe, have similar cross sectional shapes.
    The ratio of : the inside diameter of the cross section of the connecting portion (2) of the pipe, to : the outside diameter of the cross section of the connecting portion (7) of the fitting, being comprised between 0,98 and 1,00.

EP 0 440 461 A1

# DRIVE SHAFT MADE OF FIBER-REINFORCED PLASTICS

This invention relates to a torque transmitting shaft (hereinafter referred to as a drive shaft) which is made of fiber-reinforced plastics (hereinafter sometimes referred to as "FRP") and which is suitable for use in automobiles, ships or helicopters. This invention also relates to a process for producing such drive shaft.

Conventional drive shafts for use with automobiles, ships,etc. are commonly made of solid or hollow metal pipes having a metallic fitting jointed to both ends.

With the recent demand for reducing the weight of automobiles, attempts are being made to substitute FRP for metals not only in the car body but also in structural members. Among the structural members of automobiles, drive shafts which are rotary parts will benefit the most from weight reduction, and active efforts are being made to use FRP in these parts. The weight of FRP drive shafts is a quarter to one half the weight of conventional steel drive shafts and, in addition, FRP drive shafts permit higher critical rotational speeds. Because of these advantages, FRP drive shafts are to an increasing extent mounted in automobiles with a view to reducing vibrations and noise.

The use of FRP drive shafts in ships has also attracted attention in order to deviate the torsional resonant frequency from the range of common operating rotational speeds so as to assure good ride characteristics. This is because of the following two reasons : FRP have higher values of specific strength (strength divided by density) and specific modulus (modulus divided by density) than metals such as steel and aluminum ; and by changing the angle of fiber orientation, the bending and torsional stiffness of FRP can be freely modified in such a way that the resonant frequency is made either high or low with the torsional strength being held constant.

FRP drive shafts are manufactured by joining a metallic fitting to both ends of a hollow FRP pipe. The common practice for achieving this is to prepare a FRP pipe and fittings separately and later join them together by a specified method. However, problems have existed in joining the FRP pipe to the fitting (in the case of an automobile, a metal yoke) which is to be connected to both ends of the pipe. Conventionally, power transmission shafts have been joined to fittings merely by securing with an adhesive two cylindrical members (JP-A-Hei-1-216108 ; the term "JP-A" as used herein means an unexamined published Japanese patent application) or two tapered conical mating portions (JP-A-Sho-59-83620 and JP-A-Sho-59-159414) that are fitted together. However, when a large torque is exerted on the fitting upon impact, the adhesive will come off and the resulting slip can either make the transmission of high torque impossible or reduce the endurance of the shaft at elevated temperatures.

An attempt has also been made to ensure the transmission of high torque by bonding both the inner and outer surfaces of each of the members to be joined (JP-B-Sho-58-36210 ; the term "JP-B" as used herein means an "examined Japanese patent publication") but this idea has not been reduced to practice on account of poor cost performance.

With a view to solving these problems, it has been proposed that FRP pipes be coupled mechanically to metal joints either by providing ridges, knurls, threads, etc. on the surface of joints (JP-A-Sho-53-74650) or by providing a regular polygonal shape for the cross section of each of the portions to be joined (JP-A-Sho-55-159310, JP-A-Sho-55-159311, JP-A-Sho-55-159312, JP-A-Sho-55-159314, JP-A-Sho-54-159930 and JP-A-U-Sho-61-162619 ; the term "JP-A-U" as used herein means an "unexamined published Japanese utility model application"). In the case of using cylindrical coupling portions, it has been proposed that a joint element be pressed into a FRP pipe having a smaller inside diameter than the outside diameter of the joint element, with the two members being coupled by frictional force (JP-A-Sho-64-49719).

Compared to coupling portions having a circular cross section, those having a regular polygonal shape are subject to a greater degree of stress concentration and hence need reinforcement by suitable means such as metallic connectors/sleeves. Further, it is difficult to ensure reliable reinforcement, and cracking or slip tends to occur in the joint when it receives high torque. Therefore, the mechanical coupling of members having a regular polygonal cross section involves serious problems such as complexity in structure and manufacture as well as high cost and it has not yet been commercialized.

In the early stage of development of FRP pipes, carbon-fiber-reinforced plastic pipes which were solely reinforced by carbon fibers were proposed. In one version of such FRP pipes, the carbon fiber reinforcement consists of an outermost layer, an intermediate layer made up of more than one ply and an innermost layer, with the carbon fibers in the outermost and innermost layers being wound at angles of 85 -90 degrees with respect to the axial direction of the shaft whereas the fiber in the intermediate layer is wound at angles of 15 - 50 degrees, with the carbon fibers in adjacent turns of the winding crossing each other at angles of 30 - 90 degrees. It has been claimed that this arrangement enables high-speed rotation without substantial increase in vibrations and noise. However, drive shafts in automobiles that use carbon fibers in the outermost layer have such a low impact resistance that they are vulnerable to impact loads such as collision with stones during the driving of a car, thereby increasing the chance of damage to the shaft.

With a view to solving this problem, it has been proposed that a roving of glass fibers be wound around the outermost layer at angles of ±60 - 90 degrees with respect to the shaft axis (JP-B-Sho-60-41246). However, this approach still involves the following defects : much time is required to wind up fibers ; it is difficult to form a smooth outermost layer, so when the shaft is mounted in an automobile and caused to rotate at high speed, a whistling sound or whish is likely to occur ; and when the roving of glass fibers is wound around the outermost layer, it will bite into the inner carbon fiber layer, causing waved or otherwise misaligned portions in carbon fibers, which can sometimes lower the strength and stiffness of the shaft.

There are two basic objects to be attained by the present invention ; one of them is to improve the method of joining a FRP pipe and a fitting in such a way as to provide a lightweight and yet rugged joint ; and the other object is to develop not only a FRP drive shaft that has high impact resistance, torsional strength and surface smoothness but also a process for producing such shaft with high efficiency.

The first object of the present invention is described below in detail. When two members in cylindrical form are joined together using an adhesive, the reliability of bonding force and hence the strength of adhesion will decrease with time, potentially causing problems in fields of application where high torques are needed. In the case of coupling by frictional force, not only is it difficult to mold products having uniform performance but there also occurs the entrance of moisture and other unwanted materials through small gaps and the resulting phenomena such as the oxidation of steel joint elements will cause a decrease in strength during use.

On the other hand, when two members having a regular polygonal cross section are joined together, the torques exerted on the shaft is retained both by the mechanical reaction force working at each corners of the joint and by frictional force. Hence, upon application of repeated torques, a small offset begins to develop between the fitting and the connecting portion of the shaft, whereby the retention by frictional force will first decrease and then the corners of the fitting will act to expand the connecting portion of the shaft in the radial direction. As a result, the fitting will slip or the connecting portion of the shaft will break ; these problems are peculiar to the use of members having a regular polygonal cross section and would have never occurred in joining two cylindrical members. Thus, compared to the case of coupling two members having a circular cross section, those having a regular polygonal shape are subject to a greater degree of stress concentration and hence need reinforcement by suitable means such as metallic connectors/sleeves. Further, it is difficult to insure reliable reinforcement and cracking or slip tends to occur in the joint when it receives high torques. Therefore, the mechanical coupling of members having a regular polygonal cross section has involved serious problems such as complexity in structure and manufacture as well as high cost and it has not yet been commercialized.

According to the present invention we provide a drive shaft composed of a fiber-reinforced plastic pipe and a fitting pressed thereinto, the connecting portion of said fiber-reinforced plastic pipe to be fitted over said fitting and that of the latter having similar cross-sectional shapes, the ratio of the inside diameter of the cross section of the connecting portion of said fiber-reinforced plastic pipe or the distance between the inside surfaces of its opposing sides to the outside diameter of the cross section of the connecting portion of said fitting or the distance between the outside surfaces of its opposing sides being smaller than 1.0 but not smaller than 0.98, said fitting being pressed into said fiber-reinforced plastic pipe, with a liquid adhesive being preliminarily applied onto the mating surfaces, whereby said two members are connected to form an integral assembly.

Preferred features of the invention are as follows. The outside surface of the connecting portion of said fitting has an average surface roughness of 2.0 - 1,000 $\mu$m.

The outer cross-section of the connecting portion of said fiber-reinforced plastic pipe and the inner cross-section of the connecting portion of said fitting can have regular polygonal shapes that are similar to each other; or are circular in shape.

The outside surface and/or inside surface of the connecting portion of said plastic pipe can be reinforced with a fiber which is applied at an angle of ±75 - 90° with respect to the longitudinal axis of the pipe and which is provided in such a way that said connecting portion is 1 to 3 times as thick as the non-connecting portion of said fiber-reinforced plastic pipe.

The plastic pipe may consist of at least three different layers, with the inner layer being composed of a fiber that has a modulus of at least 15 tons/mm$^2$ and that is laminated at angles of 0 - ±45° with respect to the principal axis of the shaft, the intermediate layer being composed of a fiber e.g. a tape of woven fabric, which has a modulus of 5 - 15 tons/mm$^2$ and an elongation at break of at least 2% and which is laminated at angles of ±60 - 90° with respect to the principal axis of the shaft, and the outer layer being composed of a matrix resin ; and a tape.

The drive shaft of the invention made as aforesaid can be produced by pressing said fitting into fiber-reinforced plastic pipe with a lubricating liquid adhesive being preliminarily applied onto the mating surfaces.

In the accompanying drawings :

Figs. 1 and 5 are perspective views of drive shafts having a fitting fitted thereinto.

EP 0 440 461 A1

Figs. 2 and 6 are perspective views of mandrels.

Figs. 3 and 7 are perspective views of drive shafts.

Figs. 4 and 8 are perspective views of fittings.

The compositional elements of the present invention are described more specifically hereinafter. The connecting portion of the FRP pipe used in the drive shaft of the present invention and the connecting portion of the fitting that is to be fitted into said FRP pipe and which is typically made of a metal have similar cross sections that are either circular or preferably in a regular polygonal shape. In the former case where the connecting portions are cylindrical in shape, the ratio of the inside diameter of the cross section of the connecting portion of the FRP pipe to be fitted over the fitting to the outside diameter of the cross section of the connecting portion of said fitting is smaller than 1.0 but not smaller than 0.98. Preferably, the ratio is smaller than 0.9995 but not smaller than 0.9800. If the ratio is 1.0 or higher, no adequate clamping force will be exerted upon the connecting portion of the shaft and all torsional force that develops will act on the adhesive layer, potentially destroying it. If the ratio is smaller than 0.98, it is difficult to press the fitting into the connecting portion of the shaft or the latter can potentially break. If either one of the connecting portions has a rough outer surface, its "outside diameter" is measured with ridges on the rough surface being taken to delineate the "outer surface" of that connecting portion.

In order to ensure that the connecting portion of the fitting is smoothly pressed into the connecting portion of the shaft, the end of the former is preferably chamfered. The chamfered end of the connecting portion of the fitting has a diameter that is smaller than the inside diameter of the connecting portion of the shaft by at least 0.5 mm, preferably at least 1.0 mm. the angle of chamfer is acute (≤60°), preferable 45° or smaller, with respect to the axial direction of the fitting.

The fitting is pressed into the FRP pipe, with a liquid adhesive being preliminarily applied onto the mating surfaces, whereby the two members are joined to form an integral assembly. The adhesive to be used in the present invention is liquid and it preferably has a viscosity of 50 - 1,000 poises at room temperature. Since the adhesive is liquid, it will work as a lubricant that assists in pressing the fitting into the connecting portion of the shaft. If the fitting is pressed in with no adhesive applied to the mating surfaces, the frictional force between the fitting and the inner surface of the connecting portion of the shaft will damage the fiber reinforcement on that inner surface, potentially leading to lower strength. If the viscosity of the adhesive to be used in the present invention is lower than 50 poises, it will flow out of the clearance between the members being joined and is unable to exhibit the intended bonding effect. If the viscosity of the adhesive is higher than 1,000 poises, viscosity resistance presents difficultly in pressing the fitting into the connecting portion of the shaft. After the fitting is pressed in, the adhesive is optionally cured by, for example, heating.

Epoxies, urethanes and acrylics are preferably used as the adhesive in the present invention. Among these, epoxy adhesives are particularly preferred and they may be exemplified by Epoxy "Patch Kit®" (Hysol Co., Ltd.), HT 18-(20)X (Taoka Kagaku Co., Ltd.) and Sony Bond® (Sony Chemical Corporation).

The outer surface of the connecting portion of the fitting to be fitted into the shaft (or more precisely the FRP pipe) preferably has an average surface roughness of 2.0 - 1,000 μm. If the average surface roughness of that connecting portion is within this range, the bite of ridges on the rough surface into the inner surface of the shaft and the anchoring effect of the adhesive in grooves in that rough surface will combine to achieve marked improvement in the bonding power of the adhesive. More preferably, the average surface roughness is 5 - 100 μm. If the outer surface of the connecting portion of the fitting has an average surface roughness of less than 2.0 μm, the desired "bite" or the anchoring effect of the adhesive will not be fully exhibited. If the average surface roughness 1,000 μm, the strength of the connecting portion of the fitting which is in the form of a thin-walled cylinder to insure light weightiness is so much reduced as to present difficulty in achieving reliable coupling.

There are various methods that can be employed to provide the outer surface of the connecting portion of the fitting with surface roughnesses within the above defined range and they include grinding and polishing with emery paper, shot blasting with abrasive grains, buffing with abrasive grains, and mechanical working on lathes, milling machines, etc. Among these methods, the first three are particularly preferred.

The connecting portions of the FRP pipe and the fitting are preferably in a regular polygonal shape. For insuring positive transmission of torque, regular polygonal shapes ranging from a regular hexagon to a regular dodecagon are preferred, with a regular hexagon or octagon being particularly preferred. Polygons having fewer corners than a regular hexagon are not appropriate since excessive stress concentrations will occur or the outer dimensions of the shaft will unduly increase. Polygons having more corners than a regular dodecagon produce shapes that are more closer to a cylinder than bodies having a polygonal cross section and the features offered by using a regular polygon are lost. The ratio of the distance between the inner surfaces of the opposing sides of the regular polygonal cross section of the connecting portion of the FRP pipe to the distance between the outer surfaces of the opposing sides of the regular polygonal cross section of the connecting portion of the fitting is smaller than 1.0 but not smaller than 0.98 and the fitting is pressed into the FRP pipe, with a liquid adhesive preliminarily applied onto the mating surfaces, whereby the two members are joined to form a unitary assembly. Preferably, the ratio defined above ranges from 0.9995 to 0.9800. If the ratio is 1.0 or higher, no adequate residual tensile stress will be exerted on the connecting portion of the shaft, so that an applied torque load will produce a flaring force that causes slippage of the fitting, which therefore fails to transmit stress from the shaft. If the ratio is smaller than 0.98, it is difficult to press the fitting into the connecting portion of the shaft or the latter can potentially break.

As already mentioned, the liquid adhesive used in joining the FRP pipe and the fitting not only serve as a lubricant but also increases the strength of joint.

For efficient press jointing, the outer surface of the connecting portion of the fitting to be joined with the FRP pipe desirably has an average surface roughness of 2.0 - 1,000 μm. Preferably, said surface is conditioned to have an average surface roughness of 5 - 100 μm.

The connecting portion of the FRP pipe in the torque transmitting FRP shaft of the present invention is preferably thicker than the other portions of the FRP pipe (the thickness of the other portions of the FRP pipe is hereinafter sometimes referred to as the "pipe thickness") but should not be more than three times as thick as the other portions of the pipe. To this end, reinforcing fibers are wound onto the FRP in that connecting portion at angles in the range of ±60 - 90°, preferably ±70 - 90°. If the overlap angle of reinforcement fibers is smaller than ±60 degrees, stiffness in the peripheral direction will decrease and no marked reinforcing effect can be attained.

Fibers to be used predominantly for reinforcing the connecting portion of the FRP pipe must have high modulus in order to improve stiffness in the peripheral direction in an efficient manner. If the modulus of reinforcement fibers is lower than 5 tons/mm$^2$, stiffness in the peripheral direction will decrease, so that the high torque transmitted from the fitting will flare the connecting portion of the FRP pipe until it breaks in the long run.

The thickness of reinforcement layer on the connecting portion of the FRP pipe will vary with the Young's modulus of the said layer in the peripheral direction and the length of the connecting portion of the FRP pipe. If the thickness of the reinforcement layer is smaller than the pipe thickness, an applied torque will either cause the connecting portion of the FRP pipe to rotate or destroy it. If, on the other hand, the thickness of the reinforcement layer is more than three times as great as the pipe thickness, the outside diameter of the connecting portion of the FRP pipe becomes excessively larger than the other portions or the unevenness in shape due to the difference in thickness from the other portions of the pipe will so much increases as to cause undesirably large stress concentrations.

In order to meet the need for increasing the resonant frequency of the rotating shaft and its torsional strength, fibers having high modulus and strength are desirably used in constructing the FRP pipe and its reinforcement zone. From this viewpoint, at least one fiber selected from carbon fibers, glass fibers, aramid fibers and ceramic fibers is used as a chief component. Fibers having high values of specific strength and stiffness are preferred since they are more effective for attaining the propose of weight reduction and carbon fibers are particularly preferred. For economic reasons, the combined use of carbon fibers and glass fibers is also preferred.

The form of fibers to be used as reinforcing materials is in no way limited and they can be used in the form of roving, woven fabric or prepreg. Tape of a woven fabric made from synthetic fibers such as polyesters, polyamides or vinylon can be used as the outermost layer of the FRP pipe.

The volume content of the reinforcing fibers in FRP is preferably in the range of 40 - 80%, more preferably 50 - 70%. If the volume content of reinforcing fibers is less than 40%, their reinforcing effect is insufficient to enhance stiffness in the radial direction. If the volume content of the reinforcing fibers is higher than 80%, the probability of contact between fibers will increase and the strength of the shaft will decrease rather than increase. The more preferred range of fiber content is from 55 to 65%.

In manufacturing the FRP pipe, the reinforcing fibers are wound around at specific angles with respect to the longitudinal axis of the pipe to form a fiber laminate. While various materials combinations could be adopted to form the laminate, the present inventors found that the following method for producing the FRP pipe was preferred since it provided torsional strength and impact resistance at commercially acceptable levels and higher, involved simplified manufacturing steps, and insured high production rate and economy. The FRP pipe to be used in the present invention consist of at least three portions that are superposed one on another in the radial direction of the pipe.

First, the innermost portion is composed of a fiber having a modulus of at least 15 tons/mm$^2$ that is wound at angles of 0 - ±45°, preferably ±10 - ±30°, with respect to the longitudinal axis of the pipe, with the individual fibers being desirably cross would in a way symmetrical to the longitudinal aixs of the pipe except for the case where the angle of winding is zero degrees. In the case of cross-winding, the fiber is desirably laminated in two or more layers. This is necessary for two purposes : increasing them modulus in the longitudinal direction

5

of shaft in order to increase the critical rotational speed ; and maintaining the torsional strength of shaft at high values. The angle of lamination may be the same for each layer or it may be different between layers within the range of winding angles set forth above. In order to facilitate the shaping process and to reduce the shaping cost, fibers are preferably wound at the same angle for individual layers.

The fiber to be used in the innermost layer has a modulus of at least 15 tons/mm², and those having a tensile strength of at least 150 kg/mm² are preferred. Illustrative fibers that satisfy these requirements are carbon fibers and various ceramic fibers as exemplified by alumina fibers, boron fibers, silicon carbide fibers and silica fibers. These fibers may be used either alone or in combination. Fibers having high values of specific strength and stiffness are preferred since they are more effective for attaining the purpose of weight reduction. From this viewpoint, carbon fibers can be used either alone or in combination with other fibers. The form of fibers is in no way limited and they can be used in various forms such as roving, woven fabric and prepreg.

Second, an intermediate layer that not only provides a reinforcing effect but also has the ability to absorb the energy of collision with external objects such as stones is formed around the innermost layer. Fibers having a modulus of 5 - 15 tons/mm² and an elongational at break of at least 2% are used as reinforcement. Examples of reinforcing fibers that satisfy these requirements are glass fibers and organic high-modulus fibers as exemplified by aramid fibers, super-high molecular weight polyethylene fibers and highly oriented polyvinyl alcohol fibers. These fibers are laminated at angles of ±60 - 90°, preferably ±75 - 90°, with respect to the longitudinal axis of the FRP pipe.

The fibers are desirably used in the form of a tape of woven fabric in order to have uniform tension applied and to enable uniform squeezing of matrix resins. There is no particular limitation on the method of weaving to make the tape of woven fabric and plain weave, satin weave, cross weave and various other methods can be employed.

In order to ensure uniformity in the surface of the shaft, the thickness of tape of woven fabric is preferably 10-500 μm, with the range of 50 - 250 μm being more preferred.

Too narrow tapes of woven fabric are difficult to handle and too broad tapes are also disadvantageous since no tension can be applied uniformly and wrinkles will develop on the surface of the tape. Under these circumstances, the width of woven fabric tape is preferably in the range of 10 - 200 mm, more preferably between 10 mm and 50 mm.

The tape of woven fabric preferably consists of the aforementioned reinforcement fibers in the warp direction and reinforcement fibers and/or organic fibers in the weft direction, with the ratio of weft to warp reinforcement fibers being preferably in the range of 0 - 2/3. Weft may be used merely for the purpose of retaining the warp yarns in tape form and in this case the ratio of weft to warp fibers is substantially close to zero.

The tape of woven fabric forming the intermediate layer is wound in such a way that the angle the warp direction forms with the longitudinal axis of the shaft will lie in the range of ±60 - 90°, preferably between ±70 and 90°. The tape is wound in such a way that adjacent turns of the tape will overlap each other and that it is cinched sufficiently to have the matrix resin squeezed uniformly. Three or more turns of the tape may overlap one another without causing any particular problem but it should be noted that the presence of any gaps between adjacent turns is not preferred from the viewpoint of impact resisting performance.

A resin layer with a smooth flat surface that is solely made of a matrix resin is formed as the outermost layer around the intermediate layer made of woven fiber tape. This resin layer preferably has a thickness of 0.1 - 2.0 mm. If the thickness of the resin layer is less than 0.1 mm, it is not sufficiently effective to provide a smooth outer surface for the shaft. If the resin layer is thicker than 2.0 mm, the weight reduction achieved by the use of FRP pipe is compromised. By adopting the method of the present invention, a smooth surfaced resin layer can be formed and the occurrence of unwanted phenomena such as a whistling sound (whish) during use can be avoided.

Illustrative matrix resins include : thermosetting resins such as epoxy resins, unsaturated polyester resins, vinyl ester resins, urethane resins, phenol resins, alkyd resins, xylene resins, melamine resins, furan resins and silicone resins ; and thermoplastic resins such as polyethylene resins, polypropylene resins, polyvinyl chloride resins, polymethylmethacrylate resins, ABS resins, fluorine resins, polycarbonate resins, polyester resins, polyamide resins (nylon 6, 6/6, 6/10, 6/11, 6/12, etc.), polyphenylene sulfide resins, plysulfone resins, polyether sulfone resins, polyether ether ketone resins and polyphenylene oxide resins. From handling and performance viewpoints, epoxy resins, unsaturated polyester resins and vinyl ester resins are preferred.

The drive shaft of the present invention can be manufactured using FRP by various known techniques and advantageous examples are filament winding and rolling table methods that are effective in providing desired fiber strength in an efficient way.

The basic composition of the present invention which is characterized by a three-layer laminate may be modified in various ways by adding other layers of winding. The wall thickness of the FRP pipe may be properly selected depending upon the characteristics required of the shaft ; if it is to be used as an automotive propeller shaft, the FRP pipe typically has a wall thickness of 7 mm or smaller, more preferably 5 mm or below.

In order to ensure smooth insertion, the outer profile of the end portion of the fitting to be pressed into the connecting portion of the shaft is preferably smaller than the corresponding inner profile of the shaft, with said end of the coupling portion being gradually tapered inwardly (i.e., in the direction in which it is pressed into the shaft). As guide figures, the distance between the opposing sides in the end portion of the fitting is preferably smaller by at least 0.5 mm than the distance between the opposing sides of the connecting portion of the shaft, with the angle of taper being not larger than 30 degrees. Conversely, the inner profile of the end of the connecting portion of the shaft may be larger than the outer profile of the end portion of the fitting which is to be pressed into the shaft, with said end of the coupling portion being gradually tapered inwardly.

The fitting to be used in the present invention is preferably made of metal since metal has good mechanical properties and is easy to work. Particularly preferred are iron, aluminum, titanium, magnesium and alloys that contain at least one of these metals. Iron, aluminum and alloys that contain either iron or aluminum or both are particularly preferred from economic viewpoints.

## EXAMPLES

### Example 1

A release agent was applied onto the surface of a cylindrical mandrel indicated by 4 in Fig. 2. A ring 5 having a regular octagonal cross section on both the inside and outside surfaces of one end and a circular cross section at the other end was inserted into opposite ends of the mandrel 4. The mandrel 4 had a diameter of 70 mm and a length of 1,300 mm, with a chucking axle 6 (40 mm $\phi$ x 300 mm$^L$) being provided at opposite ends. The ring 5 had a regular octagonal shape at one end, with the distance between the inner opposing sides being 70 mm, and had a circular shape at the other end with the inside diameter being 70 mm. The regular octagonal portion of the ring was 50 mm long and the overall length of the ring was 80 mm, with the regular octagonal portion being connected to the circular end portion by a gradual taper. Glass fiber (GF) and carbon fiber (CF) which are impregnated with an epoxy resin, and a synthetic fiber tape were wound onto the mandrel 4 by a filament winding method (for the order, angle and thickness of lamination, see Table 1) and the mandrel with the laminate was cured by heating at 150°C for 2 h.

The glass fiber used was FW direct roving R1150-TKF08 (2,000 filaments; modulus in tension, 7.4 tons/mm$^2$; tensile strength, 350 kg/mm$^2$) which was the product of Asahi Fiber Glass Co., Ltd. The carbon fiber used was AS-4 (modulus in tension, 24 tons/mm$^2$; tensile strength, 390 kg/mm$^2$) which was the product of Hercules Incorporated. The synthetic fiber tape used was Tetoron FW tape 50 mm wide which was the product of Jalt Co., ltd.

Unwanted portions were cut off from opposite ends of the cured mandrel with the laminate and the thus shaped FRP pipe was removed from the mandrel, whereupon a FRP drive shaft indicated by 1 in Fig. 3 was obtained. The shaft had a regular octagonal connecting portion 2 at both ends, with the distance between the inner opposing sides of that connecting portion being ca. 70.1 mm.

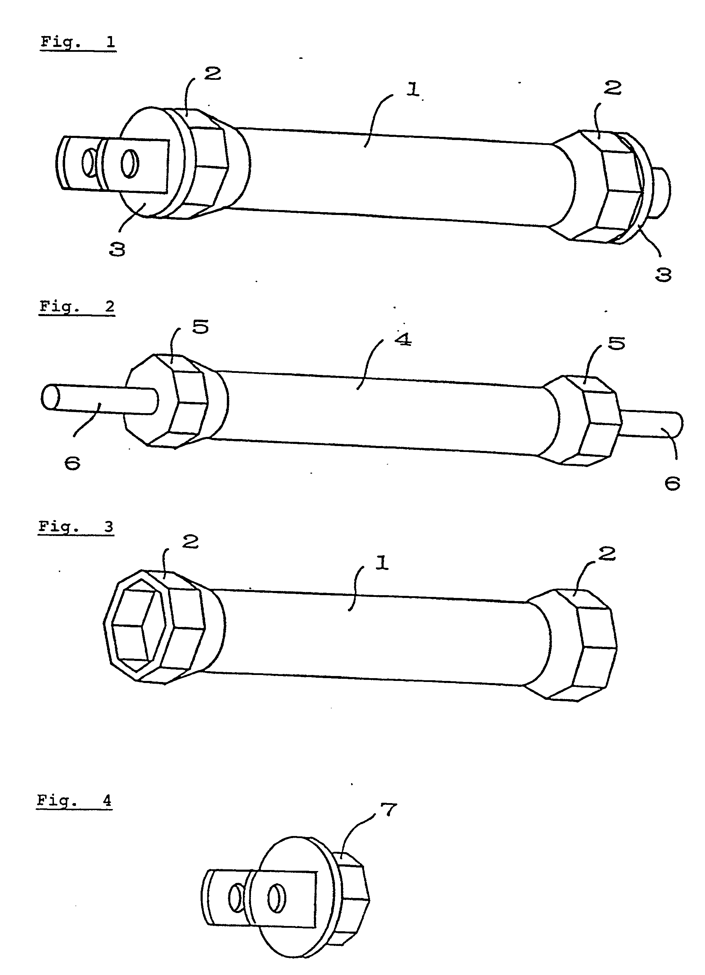

Various steel fittings having a regular octagonal connecting portion indicated by 7 in Fig. 4 were fabricated by mechanical working and the distance between the opposing sides of each fitting is measured. An adhesive, Epoxy "Patch Kit®" (Hysol Co., Ltd.) was applied onto all of the inner surfaces of the connecting portion of the shaft and each of the fittings was pressed in to produce a drive shaft 1 having fittings 3 formed as integral parts as shown in Fig. 1. In a torsion test, the shaft broke under a torque of 660 kgf-m without experiencing any slip or destruction of the joint. The result is also indicated in Table 1 (the same applies the following examples and comparative examples).

### Example 2

A FRP drive shaft was molded; it had the same thickness of lamination and the same angle of orientation as in Example 1 except that the laminate in the reinforced zone was composed of glass fibers instead of carbon fibers. In a torsion test, the joint broke under a torque of 580 kgf-m without any slip.

### Comparative Example 1

A FRP drive shaft was molded; it had the same laminate construction as in Example 1 except that no reinforcement was used. In a torsion test, the joint broke under a toque of 330 kgf-m without any slip.

## Comparative Example 2

A FRP drive shaft was molded ; it had the same laminated construction as in Example 2 except that the reinforcement zone was composed of a (±70°) GF layer. In a torsion test, the joint broke under a torque of 480 kgf/m without any slip.

## Comparative Example 3

A FRP drive shaft was molded ; it had the same laminate construction as in Example 2 except that the FRP pipe was joined to the fittings without using an adhesive. In a torsion test, the joint began to slip under a torque of 200 kgf-m and it did not break even when the torque was increased to 400 kgf-m.

## Comparative Example 4

A FRP drive shaft was molded ; it had the same laminate construction as in Example 2 except that the fittings were clearance-fitted, rather than pressed, into the FRP pipe. In a torsion test, the joint began to slip under a load of 200 kgf-m and no more torque could be transmitted.

The above results show the superiority of the FRP shafts produced in accordance with the present invention.

## Table 1

| Run No. | | Laminate composition | Ratio of i.d. of shaft to o.d. of fitting*4 | Torsional Breaking Torque broken area |
|---|---|---|---|---|
| Example 1 | main portion | inside(GF90° /CF±17° /fiber tape*3)outside<br>thickness (mm)  0.4 / 2.85 / 0.1 | | 560 kgf·m and the main portion of the shaft broke |
| | connect-ting portion | inside(GF90° /CF±17° /CF90° /fiber tape)outside<br>thickness (mm)  0.4 / 2.85 / 2.0 / 0.1 | 0.997 | |
| Example 2 | main portion | inside(GF90° /CF±17° /fiber tape)outside<br>thickness (mm)  0.4 / 2.85 / 0.1 | | 580 kgf·m and the joint broke |
| | connect-ting portion | inside(GF90° /CF±17° /GF90° /fiber tape)outside<br>thickness (mm)  0.4 / 2.85 / 2.0 / 0.1 | 0.990 | |
| Comp. Example 1 | main portion | inside(GF90° /CF±17° /fiber tape)outside<br>thickness (mm)  0.4 / 2.85 / 0.1 | | 330 kgf·m and the joint broke |
| | connect-ting portion | inside(GF90° /CF±17° /fiber tape)outside<br>thickness (mm)  0.4 / 2.85 / 0.1 | 0.997 | |

## Table 1(Cont'd)

| Run No. | | Laminate composition | Ratio of i.d. of shaft to o.d. of fitting*4 | Torisonal Breaking Torque broken area |
|---|---|---|---|---|
| Comp. Example 2 | main portion | inside(GF90° /CF±17° /fiber tape)outside <br> thickness (mm)  0.4 / 2.85 / 0.1 | | 480 kgf·m and the joint broke |
| | connect-ting portion | inside(GF90° /CF±17° /GF70° /fiber tape)outside <br> thickness (mm)  0.4 / 2.85 / 2.0 / 0.1 | 0.990 | |
| Comp. Example 3 | main portion | inside(GF90° /CF±17° /fiber tape)outside <br> thickness (mm)  0.4 / 2.85 / 0.1 | | *1 |
| | connect-ting (no adhesive) | inside(GF90° /CF±17° /GF90° /fiber tape)outside <br> thickness (mm)  0.4 / 2.85 / 2.0 / 0.1 | 0.990 | |
| Comp. Example 4 | main portion | inside(GF90° /CF±17° /fiber tape)outside <br> thickness (mm)  0.4 / 2.85 / 0.1 | | *2 |
| | connect-ing portion | inside(GF90° /CF±17° /GF90° /fiber tape)outside <br> thickness (mm)  0.4 / 2.85 / 2.0 / 0.1 | 1.010 | |

*1: the joint began to slip at the torque of 200 kgf·m did not break even at the torque of 400 kgf·m
*2: the joint began to slip at the torque of 200 kgf·m and further torque transmission was impossible
*3: synthetic fiber tape
*4: average surface roughness of connecting portion:  50 μm (blasting)

EP 0 440 461 A1

Example 3 and Comparative Examples 5 - 7

A mandrel (see Fig. 2) was used that was of the same type as used in Example 1 except that it had a diameter of 64 mm. A glass fiber impregnated with an epoxy resin and carbon fibers were wound onto the mandrel by a filament winding method so as to fabricate a pipe having the features described below in which GF stands for the glass fiber and CF, the carbon fiber.

Main portion :

[90°] GF inner layer/[±20°] CF intermediate layer/[±90°] CF outer layer with respective thickness 0.4 mm, 2.8 mm and 1.0 mm

Connecting portion :

Layers with respective thickness of 0.4 mmm, 2.8 mm and 4.0 mm

After winding a release film around the laminate, the mandrel was cured by heating at 150°C for 2 h. Unwanted portions were cut off from opposite ends of the cured mandrel with the laminate and the shaped FRP pipe was removed from the mandrel, whereupon a FRP shaft of the type shown in Fig. 3 was obtained. Fittings 7 were joined to the shaft to fabricate a drive shaft of the type shown in Fig. 1 which was within the scope of the present invention. The results are shown in Table 2.

## Table 2

| Run No. | Distance (A) between opposing sides of shaft in connecting portion (mm) | Distance (B) between opposing sides of fitting in connecting portion (mm) | A/B | Adhesive | Status of press-fitting | Torisonal Breaking torque | Broken area |
|---------|------|------|--------|------|------|------|------|
| Ex. 3 | 65.08 | 65.74 | 0.9900 | used | no problem | 380 Kgf·m | middle of the shaft |
| Comp. Ex. 5 | 65.08 | 67.10 | 0.9699 | used | the connecting portion of the shaft broke | – | – |
| Comp. Ex. 6 | 65.08 | 65.70 | 0.9906 | not used | several breaks occurred in fibers in the connection portion of the shaft | 320 Kgf·m | connecting portion of the shaft |
| Comp. Ex. 7 | 65.08 | 65.00 | 1.0012 | used | no problem | 300 Kgf·m | " |

*1: average surface roughness of connecting portion of fitting: 50 μm (blasting)

Examples 4 - 6 and Comparative Examples 8 - 12

A release agent was applied onto the surface of a cylindrical mandrel indicated by 3 in Fig. 6 . The mandrel had a diameter of 64 mm and a length of 1,300 mm, with a chucking axle 4 (40 mm$\phi$ and 300 mm$^L$) being provided at opposite ends. Glass fibers and a carbon fiber which are impregnated with an epoxy resin were wound onto the mandrel by a filament winding method to fabricate a FRP pipe having the features described below in which GF stands for the glass fiber and CF, the carbon fiber. The volume content of the fibers in the pipe was 65%.

Main portion :

     [90°] GF inner layer/[±20°] CF intermediate
     layer/[90°] GF outer layer with respective
     thicknesses of 0.4 mm, 2.8 mm and 0.5 mm

The glass fibers used were FW direct roving R1150-TK08 (2,000 filaments ; modulus in tension, 7.4 tons/mm$^2$ ; tensile strength, 350 kg/mm$^2$) which was the product of Asahi Fiber Glass Co., Ltd. The carbon fiber used was AS-4 roving (12,000 filaments ; modulus in tension, 24 tons/mm$^2$ ; tensile strength, 390 kg/mm$^2$) which was the product of Hercules Incorporated.

A release film was wound onto the laminate and the mandrel was cured by heating at 150°C for 2 h. Unwanted portions were cut off from opposite ends of the cured mandrel and the shaped FRP pipe was removed from the mandrel, whereupon a FRP drive shaft indicated by 1 in Fig. 7 was obtained. The shaft had an inside diameter of 65.08 mm in the connecting portion.

Various steel fittings having the shape shown in Fig. 8 were fabricated by mechanical working. The end of the connecting portion of each fitting was chamfered. After chamfering, the end of the connecting portion of each fitting had a diameter 2.4 mm smaller than the inside diameter of the connecting portion of the shaft. The angle of chamfer was acute and 30 degrees with respect to the axial direction of the fitting. The outer surfaces of the fittings were provided with four levels of surface roughness : a surface roughness of 0.6 µm by final polishing with #1200-grit ; a surface roughness of 10 µm by polishing with #240 energy paper ; a surface roughness of 45 µm by grinding with #20-grit grinder ; and a surface roughness of 2000 µm by working with a lathen.

Surface roughness measurements were conducted with a surface roughness meter Surfcon 300B, E-TD-SOIA of Tokyo Seimitsu Co., Ltd. The results of measurements of surface roughness and outside diameter of the fittings are shown in Table 3.

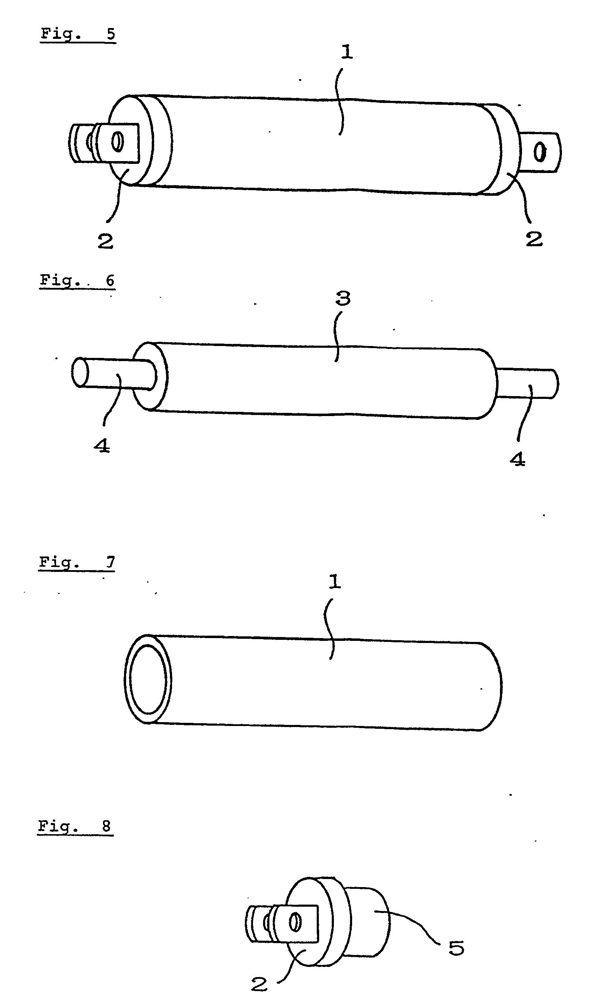

An adhesive, Epoxy "Patch Kit®" (Hysol Co., ltd.) was applied onto all of the inner surfaces of the connecting portion of the shaft and each of the fittings was pressed in to produce a drive shaft 1 having fittings 2 formed as integral parts as shown in Fig. 5. The results are shown in Table 3.

EP 0 440 461 A1

## Table 3

| Run No. | Average surface rough- ness of fitting (μm) | i.d. of connect- ing por- tion of shaft (mn) | o.d. of connect- ing por- tion of fitting (mn) | Ratio of i.d. of shaft to o.d. of fitting | Adhesive | Status of press-fitting | Torsional Breaking torque (kgf·m) | Broken area |
|---|---|---|---|---|---|---|---|---|
| Ex. 4 | 45 | 65.08 | 65.82 | 0.9888 | used | no problem | 310 | middle of the shaft |
| Ex. 5 | 10 | 65.08 | 65.82 | 0.9888 | " | " | 300 | " |
| Ex. 6 | 500 | 65.08 | 65.84 | 0.9885 | " | " | 320 | " |
| Comp. Ex. 8 | 45 | 65.08 | 67.50 | 0.9641 | " | the connecting portion of the shaft broken | – | – |
| Comp. Ex. 9 | 45 | 65.08 | 65.80 | 0.9891 | not used | several breaks occurred in fibers in the connect- ing portion of the shaft | 180 | connect- ing portion ran idle |
| Comp. Ex. 10 | 45 | 65.08 | 65.00 | 1.0012 | used | no problem | 230 | " |
| Comp. Ex. 11 | 2000 | 65.08 | 65.79 | 0.9892 | " | the fitting broken | – | – |
| Comp. Ex. 12 | 0.6 | 65.08 | 65.84 | 0.9885 | " | no problem | 250 | connect- -ing portion ran idle |

As for the shafts the connecting portion of which did not break even when the fittings were pressed in, the adhesive was cured by heating at 80°C for 4 h and the shafts were subjected to a torsion test urging a torsion tester (capacity, 500 kgf-m) of Giken Co., Ltd. The breaking torque was measured for each test sample and the results are shown in Table 3, from which one can see that the shafts fabricated in accordance with the present invention exhibited sperior performance.

Example 7

A carbon fiber (CF) ; AS-4 of Hercules Incorporated ; 12 kf W size ; strength, 390 kg/mm² ; modulus, 24 tons/mm²) having the laminated structure and thickness shown in Table 4 was wound, with it being impregnated in a matrix liquid epoxy resin, onto a steel cylindrical mandrel (o.d. 64.0 mm) by a filament winding method. The volume content of the fiber in the resin was 55%. Subsequently, a tape of woven glass fiber (GF) cloth available under the trade name "YETA 20050" from Nipoon Fiberglass Co., Ltd. (glass fiber tape ; thickness, 0.2 mm ; width, 50 mm ; welf/warp = 31/70) was wound in a single layer around the carbon fiber laminate in such a way that an overlap of ca. 15 mm would from at both ends. The angle of winding was 80 degrees.

The mandrel with the laminate of carbon fibers and glass fiber type was heated at 150°C for 2 h as it was rotated in a curing furnace, whereby the epoxy resin was cured. After cooling, the mandrel was extracted to produce a FRP cylinder.

Example 8

A FRP cylinder was fabricated as in Example 7 except that a tape of woven aramid fiber (abbreviated as "AF") cloth was wound around the carbon fiber laminate instead of the tape of woven GF cloth.

Comparative Examples 13 - 16

Shafts were fabricated as in Example 7 except that no resin layer was formed as the outer layer (Comparative Example 13), that no tape of woven fabric was used (Comparative Example 14), that GF roving was wound in place of the tape of woven GF cloth (Comparative Example 15), and that a tape of woven CF cloth was wound in place of the tape of woven GF cloth (Comparative Example 16). The thus fabricated shafts were evaluated from their performance by the following methods.
(1) Torsional breaking torque
A metallic fitting was attached to both ends of the FRP pipe in each shaft and torsional breaking torques was measured with a torsion tester.
(2) Impact resistance
A steel ball having a diameter of 5 cm and weighing 500 g was dropped under gravity from a height of 2 m to fall on the middle of each shaft in the longitudinal direction and the resulting change in the appearance of the shaft was examined visually.
(3) State of the outer surface
The appearance of each shaft was examined visually.
The results of evaluations are summarized in Table 4.

EP 0 440 461 A1

## Table 4

| Run No. | Composition of FRP pipe | o.d./i.d. (mm) | Thickness of outer-most resin layer (mm) | Torsional breaking torque (kgf·m) | Impact resis-tance | Appearance of outer surface |
|---|---|---|---|---|---|---|
| Ex.7 | inside (5 piles of CF±17°/ 1 ply of GF[*1] cloth / resin layer) outside | 73.4/65.1 | 1.5 | 354 | O.K. | Smooth |
| Comp. Ex.13 | inside (5 piles of CF±17°/ 1 ply of GF cloth) outside | 71.5/65.1 | 0 | 351 | O.K. | fine asperities present |
| Ex.8 | inside (5 piles of CF±17°/ 1 ply of AF[*3] cloth / resin layer) outside | 73.8/65.1 | 1.4 | 363 | O.K. | Smooth |
| Comp. Ex.14 | inside (5 piles of CF±17°/ resin layer) outside | 73.5/65.1 | 1.2 | 342 | damage with dia-meter of ca. 20mm occurred | Smooth |

### Table 4 (Cont'd)

| Run No. | Composition of FRP pipe | o.d./i.d. (mm) | Thickness of outer-most resin layer (mm) | Torsional breaking torque (kgf·m) | Impact resis-tance | Appearance of outer surface |
|---|---|---|---|---|---|---|
| Comp. Ex.15 | inside (5 piles of CF±17°C/ 1 ply of GF roving / resin layer) outside | 73.6/65.1 | 1.4 | 336 cracks developed in GF layer upon torque application | O.K. | fine asperites present |
| Comp. Ex.18 | inside (5 piles of CF±17°C/ 1 ply of CF[*2] cloth/resin layer) outside | 74.0/65.1 | 1.5 | 370 | damage with diameter of ca. 16mm occurred | Smooth |

*1  Elongation at break of GF : 2%<
*2  Elongation at break of CF : 1.6% (2%>)
*3  Elongation at break of AF : 2.0%<

## Claims

1. A drive shaft composed of a fiber-reinforced plastic pipe and a fitting pressed thereinto, the connecting portion of said fiber-reinforced plastic pipe to be jointed over said fitting and that of the latter having similar cross-sectional shapes, the ratio of the inside diameter of the cross section of the connecting portion of said fiber-reinforced plastic pipe or the distance between the inside surfaces of its opposing sides to the outside diameter of the cross-section of the connecting portion of said fitting or the distance between the outside surfaces of its opposing sides being smaller than 1.0 but not smaller than 0.98, said fitting being pressed into said fiber-reinforced plastic pipe, with a liquid adhesive being preliminarily applied onto the mating surfaces, whereby said two members are connected to form an integral assembly.

2. A drive shaft according to Claim 1 wherein the outside surface of the connecting portion of said fitting has an average surface roughness of 2.0 - 1,000 $\mu$m.

3. A drive shaft according to Claim 1 or 2, wherein the inner cross section of the connecting portion of said fiber-reinforced plastic pipe and the outer section of the connecting portion of said fitting have regular polygonal shapes that are similar to each other.

4. A drive shaft according to Claim 1 or 2, wherein the inner cross section of the connecting portion of said fiber-reinforced plastic pipe and the outer cross section of the connecting portion of said fitting are circular in shape.

5. A drive shaft according to any of Claims 1 to 4, wherein the outside surface and/or inside surface of the connecting portion of said fiber reinforced plastic pipe is reinforced with a fiber-reinforced plastic layer that has an overlap angle of ±75 - 90° with respect to the longitudinal axis of the pipe and that is provided in such a way that said connecting portion is 1 - 3 times as thick as the non-connecting portion of said fiber-reinforced plastic pipe.

6. A drive shaft according to any of Claims 1 to 4, wherein said fiber-reinforced plastic pipe consists of at least three different layers, with the inner layer being composed or a fiber that has a modulus of at least 15 tons/mm$^2$ and which is laminated at angles of 0 - ±45° with respect to the longitudinal axis of the shaft, the intermediate layer being composed of a fiber that has a modulus of 5 - 15 tons/mm$^2$ and an elongation at break of at least 2% and which is laminated at angles of +60 - 90° with respect to the longitudinal axis of the shaft, and the outer layer being composed of a matrix resin.

7. A drive shaft according to Claim 6, wherein a tape of woven fabric is used as the fiber in said intermediate layer.

8. A process for producing a drive shaft as claimed in any preceding claim, by pressing said fitting into said fiber-reinforced plastic pipe, a lubricating liquid adhesive being preliminarily applied onto the mating surfaces.

Fig. 1

Fig. 2

Fig. 3

Fig. 4

Fig. 5

Fig. 6

Fig. 7

Fig. 8

**European Patent Office**

## EUROPEAN SEARCH REPORT

Application Number

EP 91 30 0744

### DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | GB-A-2 207 732 (LOHR & BROMKAMP) * The whole document * | 1,4 | F 16 C 3/02 F 16 C 7/00 |
| A | | 5,8 | |
| X | FR-A-2 619 878 (VW) * The whole document * | 1 | |
| A | | 2,5,8 | |
| A | FR-A-2 531 158 (M.A.N.) * Page 4; figures * | 3,5,7 | |
| A | US-A-4 214 932 (R. VAN AUKEN) | | |
| A | FR-A-2 600 013 (VW) | | |

TECHNICAL FIELDS SEARCHED (Int. Cl.5)

F 16 C

The present search report has been drawn up for all claims

| Place of search | Date of completion of the search | Examiner |
|---|---|---|
| THE HAGUE | 16-04-1991 | BEGUIN C.P. |

EPO FORM 1503 03.82 (P0401)